(19) Europäisches Patentamt
European Patent Office
Office européen des brevets

(11) **EP 1 580 919 B1**

(12) **EUROPEAN PATENT SPECIFICATION**

(45) Date of publication and mention
of the grant of the patent:
**20.08.2008 Bulletin 2008/34**

(51) Int Cl.:
***H04L 5/00*** *(2006.01)*     ***H04B 7/04*** *(2006.01)*

(21) Application number: **05251150.8**

(22) Date of filing: **25.02.2005**

(54) **Communications systems, method and device in MIMO systems with time domain spreading**

Funkkommunikationssysteme, -verfahren und -einrichtung für MIMO-Systeme mit Zeitbereichsspreiz

Systèmes, procédé et dispositif de communications dans des systèmes MIMO avec étalement de domaine temporel

(84) Designated Contracting States:
**DE FR**

(30) Priority: **27.02.2004 GB 0404451**

(43) Date of publication of application:
**28.09.2005 Bulletin 2005/39**

(73) Proprietor: **KABUSHIKI KAISHA TOSHIBA**
**Tokyo 105-8001 (JP)**

(72) Inventor: **McNamara, Darren Phillip,**
**Toshiba Res. Europe Ltd.**
**Bristol BS1 4ND (GB)**

(74) Representative: **Richardson, Mark Jonathan**
**Marks & Clerk**
**90 Long Acre**
**London**
**WC2E 9RA (GB)**

(56) References cited:
**WO-A-20/04040788**     **WO-A-20/04075436**

• **MATSUMOTO A ET AL: "A study on time domain spreading for OFCDM" WIRELESS PERSONAL MULTIMEDIA COMMUNICATIONS, 2002. THE 5TH INTERNATIONAL SYMPOSIUM ON OCT. 27-30, 2002, PISCATAWAY, NJ, USA,IEEE, vol. 2, 27 October 2002 (2002-10-27), pages 725-728, XP010619184 ISBN: 0-7803-7442-8**
• **ATARASHI H ET AL: "Broadband packet wireless access based on VSF-OFCDM and MC/DS-CDMA" PERSONAL, INDOOR AND MOBILE RADIO COMMUNICATIONS, 2002. THE 13TH IEEE INTERNATIONAL SYMPOSIUM ON SEPT. 15-18, 2002, PISCATAWAY, NJ, USA,IEEE, vol. 3, 15 September 2002 (2002-09-15), pages 992-997, XP010611411 ISBN: 0-7803-7589-0**
• **MAEDA N ET AL: "Antenna diversity reception appropriate for mmse combining in frequency domain for forward link OFCDM packet wireless access" SPREAD SPECTRUM TECHNIQUES AND APPLICATIONS, 2002 IEEE SEVENTH INTERNATIONAL SYMPOSIUM ON SEPT. 2-5, 2002, PISCATAWAY, NJ, USA,IEEE, vol. 2, 2 September 2002 (2002-09-02), pages 363-367, XP010615492 ISBN: 0-7803-7627-7**

EP 1 580 919 B1

**Description**

This invention relates to a communications method for use in a communications system in which a transmitting device has a plurality of transmit antennas and a receiving device has a plurality of receive antennas. The invention also relates to a communications system and device using such a method. The invention has particular application where code and frequency division multiplexing schemes are applied to such a multiple-input multiple-output architecture.

A typical wireless network comprises a plurality of mobile terminals, each in radio communication with an access point or base station of the network. The access points are also in communication with a central controller that in turn may have a link to other networks, for example a fixed Ethernet-type network. Until recently considerable effort was put into designing systems so as to mitigate for the perceived detrimental effects of multipath propagation, especially prevalent in wireless LAN (local area network) and other mobile communications environments. However the described work G.J. Foschini and M.J. Gans, "On limits of wireless communications in a fading environment when using multiple antennas" *Wireless Personal Communications* vol. 6, no.3, pp.311-335, 1998 has shown that by utilising multiple antenna architectures at both the transmitter and receiver, a so-called multiple-input multiple-output (MIMO) architecture, vastly increased channel capacities are possible. Attention has also turned to the adoption of space-time coding techniques for wideband channels. Typically channel state information (CSI) for detection of such coding is acquired via training sequences and the resulting CSI estimates are then fed to a space-time decoder along with the received signal.

A particular problem arises in a communications link where a transmitter with more than one transmit antenna is employed, since signals received from different transmit antennas interfere with one another. This results in so-called multi-stream interference (MSI) and causes decoding difficulties. The potential advantage, however, is greatly increased throughput (that is, a higher bit rate) for such a communications link. In this type of MIMO (Multiple-input Multiple-output) communication link the "input" (to a matrix channel) is provided by the transmitter's plurality of transmit antennas and the "output" (from a matrix channel) is provided by a plurality of receive antennas. Thus each receive antenna receives a combination of signals from all the transmitter's transmit antennas which must be unscrambled.

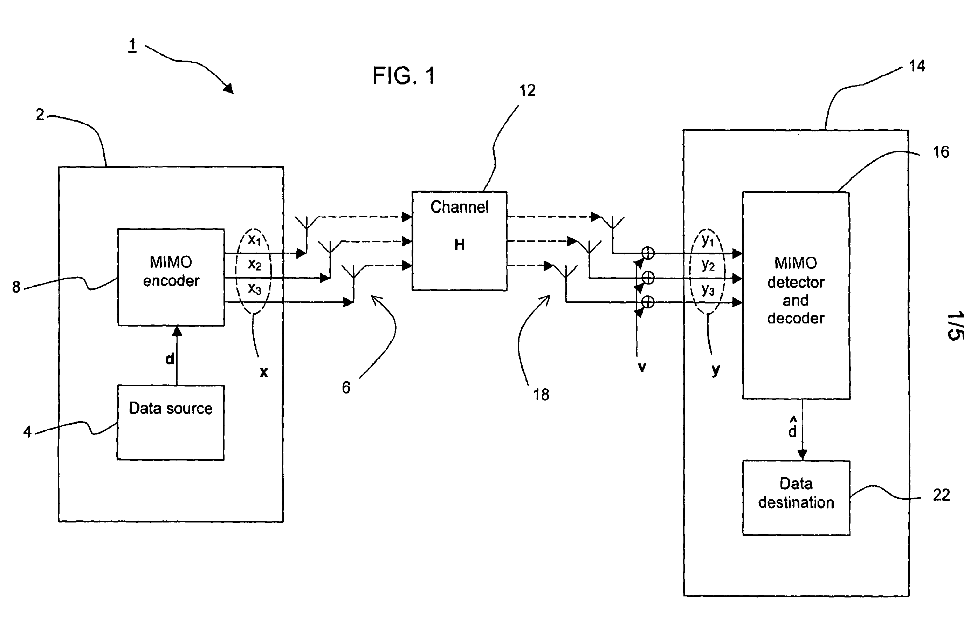

Figure 1 of the accompanying drawings is a schematic diagram illustrating a typical MIMO communication system 1 comprising a transmitting device 2 and a receiving device 14. In the transmitting device 2, a data source 4 provides an information symbol vector **d** to a MIMO encoder 8 which encodes the symbol vector **d** as $T$ code symbols $x_1 x_2..., x_T$. The $T$ code symbols $x_1 x_2..., x_T$ can be represented as transmit symbol vector **x**, and in this example, $T$ is three. The $T$ code symbols $x_1 x_2..., x_T$ are then transmitted separately and simultaneously from $T$ transmit antennas 6 respectively. An example of a MIMO encoder 8 is found by a direct mapping of input symbol $d_i$ to output symbol $x_i$.

In the receiving device 14, a plurality $R$ of receive antennas 18 receives respectively signals $y_1, ....y_R$, represented as symbol vector y. For a narrowband channel the channel conditions of the channel 12 between the transmitting device 2 and the receiving device 14 is represented by an $R$ x $T$ channel response matrix H (having $R$ rows and $T$ columns), with the noise contribution at the receiver being represented by the $R$-dimension noise vector v. Using this model,

$$\mathbf{y} = \mathbf{Hx} + \mathbf{v}. \qquad (1)$$

The receive signals y are then input to a MIMO detector and decoder 16, along with an estimate of the channel response matrix, **H.** Channel estimation in the MIMO detector 16 can be achieved in a number of well-documented ways. These inputs to the MIMO detector 16 can be used to form an estimate $\hat{\mathbf{x}}$ of the transmit symbol vector, or to directly form an estimate of the information symbol vector **d**. An example MIMO detector 16 corresponding to the example encoder described above is to generate a linear estimator matrix **W** equal to **H**$^{-1}$, so that the estimate $\hat{\mathbf{x}}$ of the transmit symbol vector is given by:

$$\hat{\mathbf{x}} = \mathbf{Wy}. \qquad (2)$$

This estimate $\hat{\mathbf{x}}$ of the transmit symbol vector is then decoded by the MIMO decoder 16 by performing the reverse of the encoding operation performed by the MIMO encoder 8 to produce an estimate $\hat{\mathbf{d}}$ of the original information symbol vector **d,** and this estimate $\hat{\mathbf{d}}$ is passed to the data destination 22.

In the example above, the linear estimator matrix **W** effectively separates the plurality of transmitted signals arriving at the receive array. Non-linear equalisers are more optimal and may employ maximum likelihood (ML) or maximum a posteriori probability (MAP) estimation techniques.

In the above example, data transmission over the channel 12 from multiple users can be handled using time division multiplexing in combination with the spatial multiplexing of MIMO so that the sequence of operations above is performed in one time frame for one user and for another user in the next time frame.

When the channel is frequency selective, this can be handled by using the OFDM (Orthogonal Frequency Division Multiplexing) technique. With standard OFDM there are a number (say, N) of overlapping tones (or sub-carriers). The bit stream is split into N parallel data streams at a rate of 1/N of the original rate. Each stream is modulated onto a unique tone and then combined to a single signal for transmission from a single antenna by means of an N-point inverse Fast Fourier Transform (IFFT). The tones are orthogonal with adjacent ones and so do not interfere. Each block of N samples output from the IFFT is known as an OFDM symbol. A fixed number of additional samples are copied from the end of each OFDM symbol and pre-pended to it. This is known as a cyclic prefix (CP). Because this CP is designed to be longer than the greatest delay of the multipath channel response, inter symbol interference (ISI) is eliminated and the data on each sub-carrier experiences a narrowband flat fading channel response.

A combined MIMO-OFDM system would operate similarly to the basic OFDM system described above where the system model for each sub-carrier can be expressed using equation (1) above. For each sub-carrier a different symbol vector, $\mathbf{x}$, would be transmitted, a different signal vector, y, would be received, and a different channel response matrix, $\mathbf{H}$, would be experienced. For example, if there were N sub-carriers, N MIMO-encoded transmit vectors would be generated. The N symbols corresponding to the first transmit antenna would be input to an IFFT and an OFDM symbol for the first transmit antenna created. This process would be repeated for each transmit antenna. The resultant $T$ OFDM symbols would then be transmitted simultaneously over the multiple antennas of the MIMO system.

Third generation mobile phone networks use a form of multiplexing known as CDMA (Code Division Multiple Access) spread spectrum signals for communicating across the radio interface between a mobile station and a base station. These 3G networks are encompassed by the International Mobile Telecommunications IMT-2000 standard. Collectively the radio access portion of a 3G network is referred to as UTRAN (Universal Terrestrial Radio Access Network) and a network comprising UTRAN access networks is known as a UMTS (Universal Mobile Telecommunications System) network. The UMTS system is the subject of standards produced by the Third Generation Partnership Project (3GPP, 3GPP2), technical specifications for which can be found at www.3gpp.org. Fourth generation networks, although not yet defined, may employ MIMO-based techniques.

Multi-Carrier Code Division Multiple Access (MC-CDMA) is similar to OFDM, but data symbols are first spread as for CDMA with a spreading code having a spreading factor SF (representing the number of chips per data bit). Multiple users can therefore be supported by each user employing a different spreading code. The SF chips are then allocated to SF adjacent sub-carriers of an OFDM system, i.e. with no spreading in time. This can result in the loss of orthogonality between spreading codes at a receiver, as each sub-carrier experiences a different channel gain. However, the use of a suitable CP, as for ordinary OFDM, eliminates inter symbol interference (ISI).

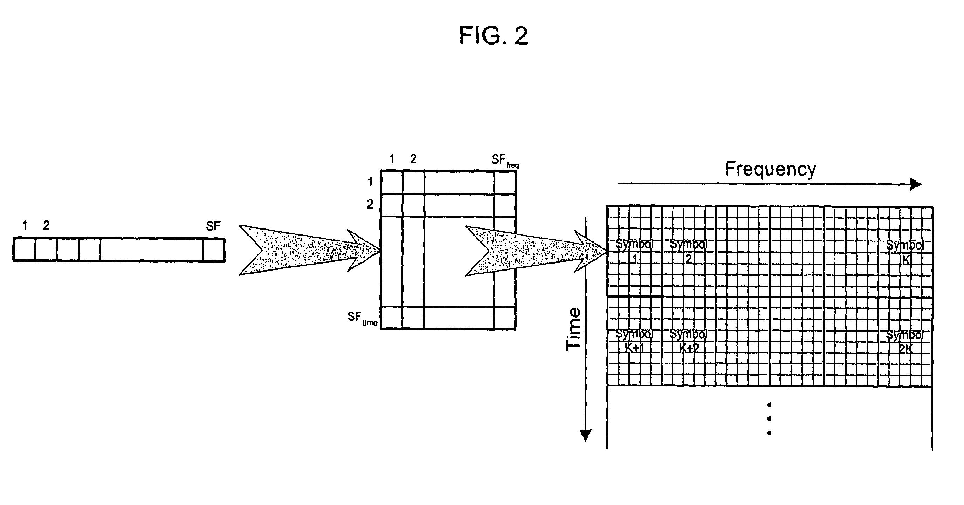

Orthogonal Frequency Code Division Multiplexing (OFCDM) is similar to MC-CDMA, but the chips resulting from spreading a single symbol can be arranged in blocks of frequency and time, so that each data symbol is allocated to a number of sub-carriers and a number of OFDM symbols on those sub-carriers. The dimensions of the block can be altered, for example the spreading can be $SF$ in time and 1 in frequency, or vice versa, or some other combination making up $SF$ chips. This is illustrated in Figure 2 of the accompanying drawings. In the example of Figure 2, the overall spreading factor $SF$ illustrated in the left-most portion is allocated with a spreading factor $SF_{time}$ in the time domain and $SF_{freq}$ in the frequency domain, as illustrated in the middle portion of Figure 2. As illustrated in the right-most portion of Figure 2, the chips of the first symbol (Symbol 1) of user data are allocated across the first $SF_{freq}$ subcarriers and the first $SF_{time}$ OFDM symbols. The next symbol (Symbol 2) of user data is spread and allocated in a similar way, being allocated to the next $SF_{freq}$ subcarriers and the same $SF_{time}$ OFDM symbols. This is repeated until all the subcarners are filled with the user's data (with Symbol $K$ occupying the final $SF_{freq}$ subcarriers). The $SF_{time}$ OFDM symbols can then be transmitted, and the next $SF_{time}$ OFDM symbols can then be allocated and transmitted in the same way. Thus a single user data fills all subcarners ($N / SF_{freq}$ must be an integer, in this example equal to K). In the right-most portion of Figure 2, the allocation is schematically shown as $SF_{freq} = 5$ and $SF_{time} = 8$ by the grid division illustrated within each symbol. MC-CDMA can be described as an OFCDM system where symbols are always spread by a factor of SF in frequency and 1 in time.

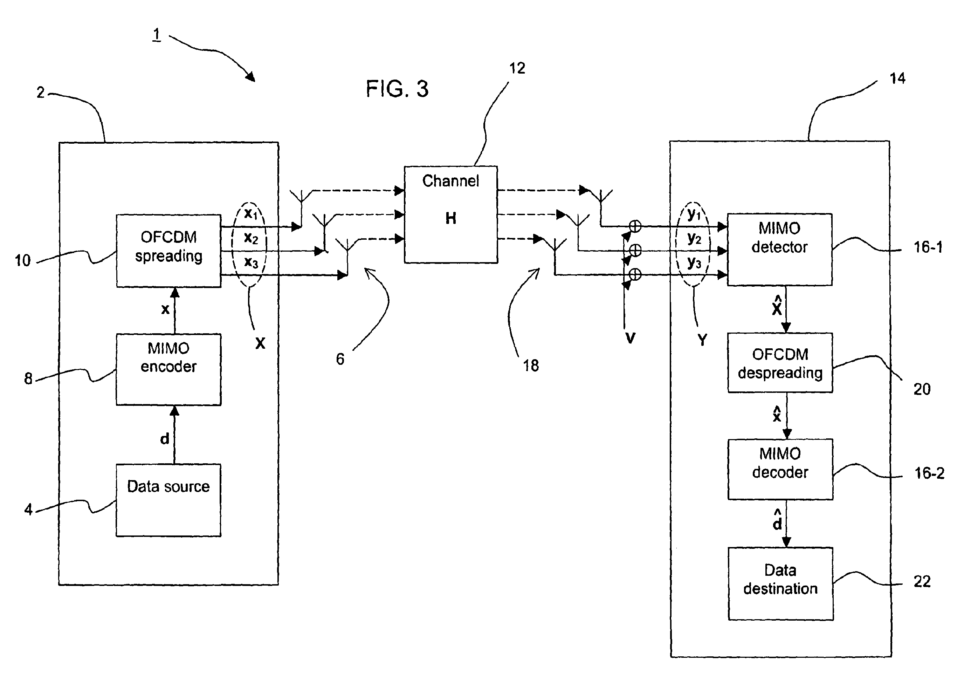

Figure 3 of the accompanying drawings shows how the MIMO communication system 1 of Figure 1 can be modified to enable data from multiple users to be multiplexed according to the OFCDM scheme. To simplify the explanation, only the data from a single user will be illustrated; the data from other users is spread in frequency and time in a corresponding way and combined onto the same transmit signals described below.

As for the MIMO system of Figure 1, in the transmitting device, a data source 4 provides an information symbol vector $\mathbf{d}$ to a MIMO encoder 8 which encodes the symbol vector $\mathbf{d}$ to a $T$-dimensional symbol vector $\mathbf{x}$. Unlike in the MIMO system of Figure 1, in the MIMO-OFCDM system of Figure 3, the symbol vector $\mathbf{x}$ is then processed by an OFCDM spreading portion 10 before transmission. The symbol vector $\mathbf{x}$ is spread in time to give a $T \times SF_{time}$ transmit chip matrix $\mathbf{X}$ ($T$ rows and $SF_{time}$ columns), where $SF_{time}$ is the spreading factor in the time dimension. The transmit chip matrix $\mathbf{X}$ is also spread across $SF_{freq}$ adjacent frequency sub-carriers as described above and the various sub-carriers combined before transmission over the $T$ transmit antennas 6.

The response of the channel 12 between the transmitting device 2 and the receiving device 14, for a single sub-carrier, is again represented by a $R$ x $T$ channel response matrix **H** ($R$ rows and $T$ columns), with the noise contribution now being represented by a $R$ x $SF_{time}$ matrix **V.**

Using the above channel model, the $R$ x $SF_{time}$ chip matrix **Y** received at the receiving device 14, can be represented as:

$$\mathbf{Y} = \mathbf{HX} + \mathbf{V}.$$

The received signals **Y** are then input to a MIMO detector 16-1. As before, the MIMO detector 16-1 requires an estimate of the channel response matrix, **H**, which can be obtained using methods well known to someone skilled in the art. An example MIMO detector 16-1 is to generate a linear estimator matrix **W** equal to **H**$^{-1}$ so that the estimate $\hat{\mathbf{X}}$ of the transmit chip matrix is given by:

$$\hat{\mathbf{X}} = \mathbf{WY}.$$

This is performed separately for each sub-carrier. The estimates $\hat{\mathbf{X}}$ of the transmit chip matrix for each sub-carrier are then passed to an OFCDM despreading portion 20 which performs the reverse of the spreading performed by the OFCDM spreading portion 10, resulting in an estimate $\hat{\mathbf{x}}$ of the $T$-dimension symbol vector **x.** This estimate is then decoded by the MIMO decoder 16-2 by performing the reverse of the encoding operation performed by the MIMO encoder 8 to produce an estimate $\hat{\mathbf{d}}$ of the original data symbol vector **d,** and this estimate $\hat{\mathbf{d}}$ is passed to the data destination 22.

As described above, the receiving device 14 conducts its antenna processing (channel estimation) separately on each sub-carrier, before despreading. This results in two principle disadvantages.

Firstly, the signal transmitted on each sub-carrier will contain the summation of chips from multiple users' symbols. Thus the effective constellation is no longer that for a single symbol, but rather a composite constellation derived from the summation of multiple chips (symbols scaled by +1 or -1 in the case of binary spreading sequences), one for each user, vastly increasing the number of points. For many practical implementations this limits the MIMO detector 16-1 to using only linear processing, such as the above matrix **W**, or the MMSE (Minimum Mean Square Error) solution. In particular, this precludes the use of the optimal A Posteriori Probability (APP) detector due to the vast number of possible solutions that must be searched.

Secondly, since **Y** is composed effectively of $SF_{time}$ time-sequential vectors of chips, the detector 16-1 must perform $SF_{time}$ estimation operations when calculating $\hat{\mathbf{X}} = \mathbf{WY}$ in order to estimate a single symbol from each transmit antenna. This is a significant overhead, greatly increasing the amount of computations for the receiving device 14.

In "Broadband Packet Wireless Access Based on VSF-OFCDM and MC/DS-CDMA", H. Atarashi, N. Maeda, A. Abeta and M. Sawahashi, in Proc. PIMRC, Lisbon, Sept., 2002, there is proposed a broadband packet wireless access employing Variable Spreading Factor-Orthogonal Frequency and Code Division Multiplexing (VSF-OFCDM) with two-dimensional spreading that prioritizes time domain spreading in the forward link and Multi-carner/DS-CDMA (MC/DS-CDMA) in the reverse link for the system beyond IMT-2000.

In "Antenna Diversity Reception Appropriate for MMSE Combining in Frequency Domain for Forward Link OFCDM Packet Wireless Access", N. Maeda, H. Atarashi, S. Abeta and M. Sawahashi, IEICE Trans. Commun., Vol. E85-B, No. 10, Oct., 2002, pp. 1966-1977 there is presented an antenna diversity combining method associated with despreading that employs Minimum Mean Square Error (MMSE) combining over the frequency domain in a frequency-selective fading channel for forward link Orthogonal Frequency and Code Division Multiplexing (OFCDM) wireless access, in order to improve radio link capacity. This reference demonstrates the concept of antenna processing either before or after the despreading operation.

WO 2004/075436 A (Samsung Electronics Co., Ltd) discloses a wireless communication system that supports transmission of encoded signals in the time domain only. For each user, the corresponding signal spreading operation is performed in accordance with two different spreading codes at two different time slots. <This patent document was published before the data of filing of the present invention but after its priority date.>

It is desirable to provide a system that overcomes some or all of the above disadvantages.

According to a first aspect of the present invention there is provided a communications method for use in a communications system comprising a transmitting device having at least $T$ transmit antennas and a receiving device having at least $R$ receive antennas, the method comprising: spreading each of $T$ symbols in the time domain only to produce *T* time sequences of chips; transmitting the *T* time sequences of chips from the *T* transmit antennas respectively of the transmitting device; despreading each of *R* time sequences of chips received from the transmitting device at the *R* receive antennas of the receiving device respectively to produce *R* received symbols; processing the *R* received symbols to produce an estimate of the *T* symbols spread at the transmitting device; the *T* symbols each being spread and the *R* time sequences of chips each being despread based on the same user-specific spreading code, with each user of the communications system being allocated a different spreading code.

The spreading codes allocated to each user are preferably orthogonal spreading codes.

The *T* time sequences of chips may be modulated onto a sub-carrier prior to transmission The sub-carrier may be a sub-carrier in an Orthogonal Frequency Division Multiplexing scheme.

The communications system may be a Multiple Input Multiple Output, MIMO, system. The *R* received symbols may be processed using a MIMO detector. The *T* symbols may be MIMO-encoded symbols produced by a MIMO encoder for transmission from the *T* transmit antennas.

The *R* received symbols may be processed in order to estimate the *T* symbols spread at the transmitting device using non-linear estimation techniques, such as the A Posteriori Probability technique. Or the *R* received symbols may be processed in order to estimate the *T* symbols spread at the transmitting device using linear estimation techniques.

According to a second aspect of the present invention there is provided a communications system comprising: a transmitting device comprising at least *T* transmit antennas, and means for spreading each of *T* symbols in the time domain only to produce *T* time sequences of chips, and transmitting the *T* time sequences of chips from the *T* transmit antennas respectively; and a receiving device comprising at least *R* receive antennas, means for despreading each of *R* time sequences of chips received from the transmitting device at the *R* receive antennas respectively to produce *R* received symbols; and means for processing the *R* received symbols to produce an estimate of the *T* symbols spread at the transmitting device.

According to a third aspect of the present invention there is provided a communications method for use by a receiving device having at least *R* receive antennas in a communications system further comprising a transmitting device having at least *T* transmit antennas and operable to spread each of *T* symbols in the time domain only to produce *T* time sequences of chips and to transmit the *T* time sequences of chips from the *T* transmit antennas respectively, the method comprising: despreading each of *R* time sequences of chips received from the transmitting device at the *R* receive antennas of the receiving device respectively to produce *R* received symbols; processing the *R* received symbols to produce an estimate of the *T* symbols spread at the transmitting device.

According to a fourth aspect of the present invention there is provided communications device for use in a communications system comprising a transmitting device having at least *T* transmit antennas and operable to spread each of *T* symbols in the time domain only to produce *T* time sequences of chips and to transmit the *T* time sequences of chips from the *T* transmit antennas respectively, the communications device comprising: at least *R* receive antennas, means for despreading each of *R* time sequences of chips received from the transmitting device at the *R* receive antennas of the receiving device respectively to produce *R* received symbols; and means for processing the *R* received symbols to produce an estimate of the *T* symbols spread at the transmitting device.

According to a fifth aspect of the present invention there is provided an operating program which, when run on a communications device, causes the device to carry out a method according to the third aspect of the present invention.

According to a sixth aspect of the present invention there is provided an operating program which, when loaded into a communications device, causes the device to become one according to the fourth aspect of the present invention.

The operating program may be carried on a carrier medium, which may be a transmission medium or a storage medium.

Reference will now be made, by way of example, to the accompanying drawings, in which:

Figure 1, discussed hereinbefore, is a schematic diagram illustrating a typical MIMO communication system;

Figure 2, also discussed hereinbefore, is a schematic illustration of the arrangement of spread chips in blocks of frequency and time in the Orthogonal Frequency Code Division Multiplexing (OFCDM) scheme;

Figure 3, also discussed hereinbefore, is a schematic diagram illustrating the MIMO communication system of Figure 1 adapted to the OFCDM scheme;

Figure 4 is a block diagram illustrating a communications system according to an embodiment of the present invention; and

Figure 5 is a chart providing a performance comparison of an embodiment of the present invention with an Orthogonal Frequency Division Multiplexing (OFDM) scheme.

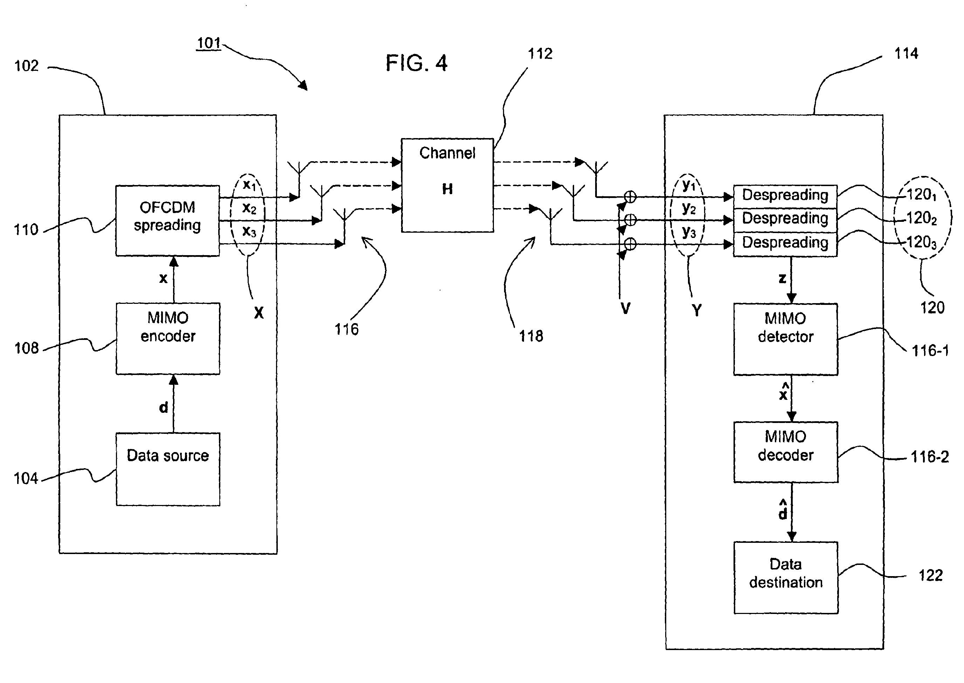

Figure 4 is a block diagram illustrating a communications system 101 according to an embodiment of the present invention. The communications system 101 embodying the present invention is similar in some respects to the communications system 1 described above with reference to Figure 3, but there are significant differences which will be described below.

The communications system 101 embodying the present invention comprises a transmitting device 102 and a receiving device 114. The communications system 101 is based on the MIMO architecture, so that the transmitting device 102 comprises a plurality $T$ of transmit antennas and the receiving device comprises a plurality $R$ of receive antennas 118. In the illustration shown in Figure 4, $T$ and $R$ are both three.

In the transmitting device 102, a data source 104 provides an information symbol vector **d** to a MIMO encoder 108 which encodes the symbol vector **d** as $T$ code symbols $x_1 x_2..., x_T$, which are represented as the symbol vector **x.**

In a similar way as described above with reference to Figure 3, the symbol vector x is then processed by an OFCDM spreading portion 110 before transmission. Each of the $T$ symbols in the symbol vector x is spread to a time sequence of chips, so that the symbol vector x is spread in time to produce a $T$ x $SF$ transmit chip matrix **X** ($T$ rows and $SF$ columns), where $SF$ is the spreading factor in the time domain. The $T$ symbols in the symbol vector x are each spread based on a spreading code, with each user of the communications system 101 being allocated a different, orthogonal, spreading code. In this embodiment the transmit chip matrix **X** is generated as:

$$\mathbf{X} = \mathbf{xc}$$

where c is a 1 x $SF$ spreading vector, where the entries are, for example, one of the orthogonal Walsh-Hadamard spreading codes of length $SF$.

Unlike for the system described above with reference to Figure 3, in an embodiment of the present invention there is no spreading in the frequency domain. The $T$ time sequences of chips contained in the transmit chip matrix **X** are separately modulated onto the first sub-carrier prior to transmission separately from the $T$ respective transmit antennas 116. This is repeated, with a different transmit chip matrices, **X,** being modulated onto each of the remaining sub-carriers. All sub-carriers are then combined and transmitted simultaneously. In this embodiment, the sub-carriers are sub-carriers in an Orthogonal Frequency Division Multiplex (OFDM) scheme. Therefore, at the transmitting device 102 at least, the communications system 101 operates according to a MIMO OFCDM scheme, but with spreading only in the time domain.

Restriction to spreading in the time domain but not in the frequency domain leads to several advantages that will be described in more detail below. In the analysis presented below, only a single sub-carrier will be considered; each of the other sub-carriers is treated in an analogous manner.

In this embodiment, the channel response of the channel 112 between the transmitting device 2 and the receiving device 14 is represented by a $R$ x $T$ channel response matrix **H** ($R$ rows and $T$ columns), with the noise contribution being represented by a $R$ x $SF$ matrix **V**. Using this channel model, the $R$ x $SF$ chip matrix **Y** received at the receiving device 114 by the $R$ receive antennas 118 can be represented as:

$$\mathbf{Y} = \mathbf{HX} + \mathbf{V}.$$

Using a scheme as proposed in the prior art described above with reference to Figure 3, the received signals **Y** (effectively a matrix of $R$ time sequences of chips) would then input to a MIMO detector 16-1 in order to descramble the MIMO channels and recover estimates of the chip sequences transmitted from the $T$ transmit antennas 116. As before, the MIMO detector 16-1 also requires an estimate of the channel response matrix, **H,** which can be obtained using methods well known to someone skilled in the art. An example MIMO detector 16-1 is to generate a linear estimator matrix **W** equal to **H**$^{-1}$ so that the estimate $\hat{\mathbf{X}}$ of the transmit chip matrix in the prior art would be given by:

$$\hat{\mathbf{X}} = \mathbf{WY}.$$

The chip sequence estimate matrix $\hat{\mathbf{X}}$ would then be despread according to the prior art scheme, resulting in an estimate $\hat{\mathbf{x}}$ of the $T$-dimension symbol vector x as follows:

$$\hat{\mathbf{x}} = \hat{\mathbf{X}}\mathbf{c}^T$$

This estimate $\hat{\mathbf{x}}$ would then be decoded in the prior art scheme by a MIMO decoder to produce an estimate $\hat{\mathbf{d}}$ of the original data symbol vector **d**.

Using the MIMO detection scheme of the prior art where the detection is performed on sequences of chips, this effectively means that the MIMO detection function is required to be called *SF* times, once for each of the *SF* *R*-dimensional chip vectors in the received chip matrix **Y**.

However, the restriction imposed above that in an embodiment of the present invention there is spreading only in the time domain and not in the frequency domain allows a different scheme to be used at the receiving device 114. A further assumption is made that the channel response does not change over the duration of the transmission of the time sequences of *SF* chips. For the majority of applications, neither the above restriction nor the above assumption will present a problem.

Since the initial restriction and assumption in the communications system 101 embodying the present invention ensure that orthogonality between spreading codes will always be maintained, there is no need for chip equalisation, and the received signals can be directly despread. This will not be affected by the number of users that are code-multiplexed, with the signals from individual users being treated independently.

Therefore, in an embodiment of the present invention the *R* chip sequences in the chip matrix **Y** are passed to *R* separate despreading portions $120_1$ $120_2$, ... $120_R$. Despreading in this manner results in an *R*-dimensional vector z of symbols, rather than chips, as follows:

$$\mathbf{z} = \mathbf{Y}\mathbf{c}^T$$

The *R* symbols in the symbol vector z are then passed to the MIMO detector 116-1 to produce an estimate of the *T* data symbols in the symbol vector **x** transmitted from the transmit antennas 116. An example MIMO detector 116-1 is to generate a linear estimator matrix **W** equal to $\mathbf{H}^{-1}$ so that the estimate $\hat{\mathbf{x}}$ of the transmit symbol vector is given as:

$$\hat{\mathbf{x}} = \mathbf{W}\mathbf{z} \, .$$

It can readily be seen that performing MIMO detection at symbol level, after despreading, only requires the MIMO detection function to be called once, rather than *SF* times as in the prior art. This is apparent by a comparison of the operation $\hat{\mathbf{X}} = \mathbf{W}\mathbf{Y}$ required in the prior art with the operation $\hat{\mathbf{x}} = \mathbf{W}\mathbf{z}$ required in this embodiment of the present invention. In the former, the chip matrix **Y** being operated on by the linear estimator **W** is made up of a *SF* vectors of dimension *R* (chip-level detection), whereas in the latter the symbol vector z is made up of only a single vector of dimension *R* (symbol-level detection). Thus the number of MIMO detection operations has been reduced by a factor of *SF* with an embodiment of the present invention; in a typical application *SF* may be 16, 32, 64 or more, so the decrease in required processing can be significant.

The symbol-level processing scheme embodying the present invention will be of increasing benefit as the number of antennas in the system increases. For these larger dimensional systems the antenna processing requirements at the receiving device can quickly become substantial or prohibitive, so a reduction in complexity of *SF* times will be all the more important.

Another important advantage over the prior art is that, since the MIMO detector 116-1 in an embodiment of the present invention is estimating symbols as opposed to chips, the MIMO detection process is no longer limited to the use of linear estimators as mentioned above in respect of the prior art system. Non-linear detectors such as the optimal A Posteriori Probability (APP) detector could be applied to the symbol vector **z** in order to obtain a better estimate of $\hat{\mathbf{x}}$, and this can lead to an improvement in performance.

Therefore, whilst the linear estimator **W** in the above-described embodiment serves as an example of a MIMO detector, this operation could (and probably would in practice) be replaced with another MIMO detector. Therefore, instead of the detection process in the above embodiment of the present invention being represented by:

$$\hat{\mathbf{x}} = \mathbf{W}\mathbf{z}$$

in the general case it would be represented by:

$$\hat{\mathbf{x}} = f(\mathbf{z})$$

where $\hat{\mathbf{x}}$ is now some arbitrary function of $\mathbf{z}$. This function could be a linear estimator such as $\mathbf{W}$, or a successive interference cancellation detector such as the V-BLAST (Bell Labs Layered Space Time) algorithm, or an exhaustive search method such as the Maximum Likelihood (ML) or A Posteriori Probability (APP) detector. With such non-linear MIMO detectors, as mentioned above it is important whether the input is just the received signal ($\mathbf{Y}$), i.e. a matrix of chips, or the despread signal ($\mathbf{Yc^T}$), i.e. a vector of symbols. Processing the received signals according to an embodiment of the present invention allows any existing (or future) MIMO detection technique to be employed for OFCDM systems, as the output from the MIMO detection function will be in the form of symbols and not chips.

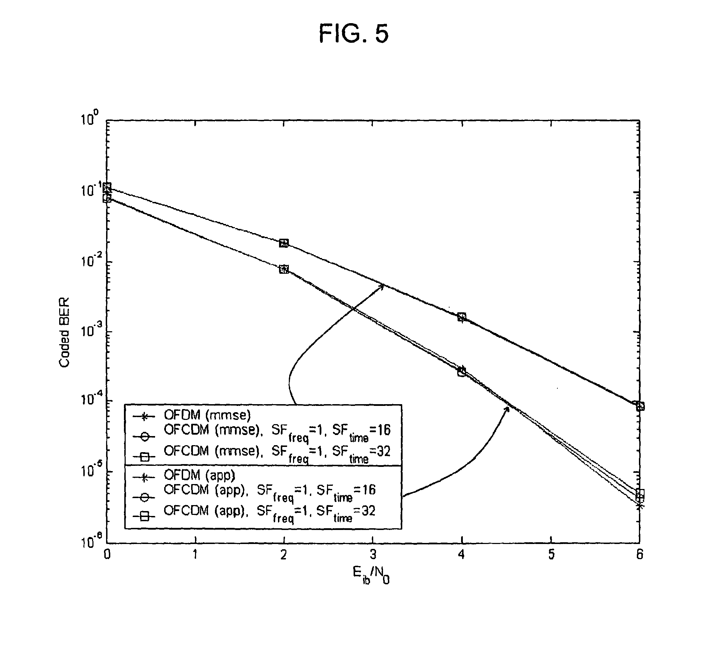

Since orthogonality between the spreading codes is ensured in the above embodiment of the present invention, the performance of a fully-loaded MEMO OFCDM system embodying the present invention (i.e. spreading in the time domain only) should be identical to that of an equivalent MIMO OFDM system (i.e. without spreading at all). Such a performance comparison is provided in Figure 5 for a communications system having two transmit and two receive antennas. The vertical axis denotes the Bit Error Rate (BER) when employing an outer convolutional code, and the horizontal axis denotes the ratio of energy per information bit to noise variance. The graph comprises two groups of lines, with each group of lines comprising three closely-spaced but separate lines. For the first group, apparent in Figure 5 as the higher of the two, a MMSE detector was used, while for the second group, apparent as the lower of the two, an APP detector was used. The three separate lines represent the results where: (i) an OFDM system was used; (ii) an OFCDM system was used with SF = 16; and (iii) an OFCDM system with SF = 32 was used. For the OFCDM systems the number of code-multiplexed users equals the total spreading factor $SF$.

From the wide separation between the two groups it is apparent that the APP detector provides superior performance. From the close separation between the lines within a group, it is apparent that very similar performance is provided from an OFDM system as compared to an OFCDM system embodying the present invention for spreading factors $SF$ of 16 and 32 (in the time domain).

Whilst a practical implementation of the chip-level scheme according to the prior art may only be able to implement the MMSE solution, the symbol-level processing scheme according to an embodiment of the present invention could use the APP detector instead in order to obtain the improved performance apparent from Figure 5. The results shown in Figure 5 are only for the symbol-level processing scheme, but the curves for chip-level processing with MMSE detection would be identical to the MMSE curves shown in Figure 5.

It will be appreciated that operation of one or both of the transmitting device 102 and receiving device 114 can be controlled by a program operating on the device. Such an operating program can be stored on a computer-readable medium, or could, for example, be embodied in a signal such as a downloadable data signal provided from an Internet website. The appended claims are to be interpreted as covering an operating program by itself, or as a record on a carrier, or as a signal, or in any other form.

An embodiment of the present invention can be applied to any communications system employing MIMO OFCDM, for example a mobile phone or base station in a mobile telecommunications system, or an access point or terminal in a wireless Local Area Network.

**Claims**

1.  A communications method for use in a communications system (101) comprising a transmitting device (102) having at least $T$ transmit antennas (116) and a receiving device (114) having at least $R$ receive antennas (118), the method comprising:

    spreading each of $T$ symbols in the time domain only to produce $T$ time sequences of chips;
    transmitting the $T$ time sequences of chips from the $T$ transmit antennas respectively of the transmitting device;
    despreading each of $R$ time sequences of chips received from the transmitting device at the $R$ receive antennas of the receiving device respectively to produce $R$ received symbols;
    processing the $R$ received symbols to produce an estimate of the $T$ symbols spread at the transmitting device;

**characterised in that** the *T* symbols are each spread and the *R* time sequences of chips are each despread based on the same user-specific spreading code, with each user of the communications system being allocated a different spreading code.

**2.** A communications method as claimed in claim 1, wherein the spreading codes allocated to each user are orthogonal spreading codes.

**3.** A communications method as claimed in claim 1 or 2, wherein the *T* time sequences of chips are modulated onto a sub-carrier prior to transmission.

**4.** A communications method as claimed in claim 3, wherein the sub-carrier is a sub-carrier in an Orthogonal Frequency Division Multiplexing scheme.

**5.** A communications method as claimed in any preceding claim, wherein the communications system is a Multiple Input Multiple Output, MIMO, system.

**6.** A communications method as claimed in claim 5, wherein the *R* received symbols are processed using a MIMO detector (116-1).

**7.** A communications method as claimed in claim 5 or 6, wherein the *T* symbols are MIMO-encoded symbols produced by a MIMO encoder (108) for transmission from the *T* transmit antennas.

**8.** A communications method as claimed in any preceding claim, wherein the *R* received symbols are processed using non-linear estimation techniques.

**9.** A communications method as claimed in claim 8, wherein the *R* received symbols are processed using the A Posteriori Probability technique.

**10.** A communications method as claimed in any one of claims 1 to 7, wherein the R received symbols are processed using linear estimation techniques.

**11.** A communications system (101) comprising:

a transmitting device (102) comprising at least *T* transmit antennas (116), and means (110) for spreading each of *T* symbols in the time domain only to produce *T* time sequences of chips, and transmitting the *T* time sequences of chips from the *T* transmit antennas respectively;
and a receiving device (114) comprising at least R receive antennas (118), means (120) for despreading each of *R* time sequences of chips received from the transmitting device at the *R* receive antennas respectively to produce *R* received symbols; and means (116-1) for processing the *R* received symbols to produce an estimate of the *T* symbols spread at the transmitting device;

**characterised in that** the *T* symbols are each spread and the *R* time sequences of chips are each despread based on the same user-specific spreading code, with each user of the communications system being allocated a different spreading code.

**12.** A communication method for use by a receiving device (114) having at least *R* receive antennas (118) in a communications system (101) further comprising a transmitting device (102) having at least *T* transmit antennas (116) and operable to spread each of *T* symbols in the time domain only to produce *T* time sequences of chips and to transmit the *T* time sequences of chips from the T transmit antennas respectively, the method comprising:

despreading each of *R* time sequences of chips received from the transmitting device at the *R* receive antennas of the receiving device respectively to produce *R* received symbols;
processing the *R* received symbols to produce an estimate of the *T* symbols spread at the transmitting device;

**characterised in that** the *T* symbols are each spread and the *R* time sequences of chips are each despread based on the same user-specific spreading code, with each user of the communications system being allocated a different spreading code.

**13.** A communications device (114) for use in a communications system (101) comprising a transmitting device (102) having at least *T* transmit antennas (116) and operable to spread each of *T* symbols in the time domain only to produce *T* time sequences of chips and to transmit the *T* time sequences of chips from the *T* transmit antennas respectively, the communications device comprising:

at least *R* receive antennas (118), means (120) for despreading each of *R* time sequences of chips received from the transmitting device at the R receive antennas of the receiving device respectively to produce *R* received symbols; and means (116-1) for processing the *R* received symbols to produce an estimate of the *T* symbols spread at the transmitting device;

**characterised in that** the *T* symbols are each spread in use and the *R* time sequences of chips are each despread in use based on the same user-specific spreading code, with each user of the communications system being allocated a different spreading code.

**14.** An operating program which, when run on a communications device, causes the device to carry out a method as claimed in claim 12.

**15.** An operating program which, when loaded into a communications device, causes the device to become one as claimed in claim 13.

**16.** An operating program as claimed in claim 14 or 15, carried on a carrier medium.

**17.** An operating program as claimed in claim 16, wherein the carrier medium is a transmission medium.

**18.** An operating program as claimed in claim 16, wherein the carrier medium is a storage medium.


**Patentansprüche**

**1.** Kommunikationsverfahren zur Verwendung in einem Kommunikationssystem (101), das eine Sendeeinrichtung (102) mit mindestens T Sendeantennen (116) und eine Empfangseinrichtung (114) mit mindestens R Empfangsantennen (118) umfasst, das Verfahren umfassend:

Spreizen eines jeden von T Symbolen im Zeitbereich, um nur T Zeitreihen von Chips zu erzeugen;
Senden der T Zeitreihen von Chips jeweils von den T Sendeantennen der Sendeeinrichtung;
Entspreizen einer jeden von R Zeitreihen von Chips, die von der Sendeeinrichtung jeweils an den R Empfangsantennen der Empfangseinrichtung empfangen werden, um R empfangene Symbole zu erzeugen;
Verarbeiten der R empfangenen Symbole, um eine Schätzung der an der Sendeeinrichtung gespreizten T Symbole zu erzeugen;

**dadurch gekennzeichnet, dass** jedes der T Symbole gespreizt wird und jede der R Zeitreihen von Chips auf der Basis desselben benutzerspezifischen Spreizcodes entspreizt wird, wobei jedem Benutzer des Kommunikationssystems ein verschiedener Spreizcode zugewiesen wird.

**2.** Kommunikationsverfahren nach Anspruch 1, worin die jedem Benutzer zugeteilten Spreizcodes orthogonale Spreizcodes sind.

**3.** Kommunikationsverfahren nach Anspruch 1 oder 2, worin die T Zeitreihen von Chips vor dem Senden auf einen Zwischenträger aufmoduliert werden.

**4.** Kommunikationsverfahren nach Anspruch 3, worin der Zwischenträger ein Zwischenträger in einem orthogonalen Frequenzmultiplexschema ist.

**5.** Kommunikationsverfahren nach einem der vorhergehenden Ansprüche, worin das Kommunikationssystem ein Mehrfacheingangs-Mehrfachausgangs(MIMO)-System ist.

**6.** Kommunikationsverfahren nach Anspruch 5, worin die R empfangenen Symbole unter Verwendung eines MIMO-Detektors (116-1) verarbeitet werden.

**7.** Kommunikationsverfahren nach Anspruch 5 oder 6, worin die T Symbole MIMO-codierte Symbole sind, die von einem MIMO-Codierer (108) zum Übertragen von den T Sendeantennen erzeugt werden.

**8.** Kommunikationsverfahren nach einem der vorhergehenden Ansprüche, worin die R empfangenen Symbole unter Verwendung von nichtlinearen Schätztechniken verarbeitet werden.

**9.** Kommunikationsverfahren nach Anspruch 8, worin die R empfangenen Symbole unter Verwendung von aposteriorischen Wahrscheinlichkeitstechniken verarbeitet werden.

**10.** Kommunikationsverfahren nach einem der Ansprüche 1 bis 7, worin die R empfangenen Symbole unter Verwendung von linearen Schätztechniken verarbeitet werden.

**11.** Kommunikationssystem (101) umfassend:

eine Sendeeinrichtung (102), die mindestens T Sendeantennen (116) umfasst, und ein Mittel (110) zum Spreizen eines jeden von T Symbolen im Zeitbereich, um nur T Zeitreihen von Chips zu erzeugen und die T Zeitreihen von Chips jeweils durch die T Sendeantennen zu übertragen;
und eine Empfangseinrichtung (114), mindestens R Empfangsantennen (118) umfassend, ein Mittel (120) zum Entspreizen einer jeden der R Zeitreihen von Chips, die von der Sendeeinrichtung jeweils an den R Empfangsantennen empfangen werden, um R empfangene Symbole zu erzeugen; und ein Mittel (116-1) zum Verarbeiten der R empfangenen Symbole, um eine Schätzung der an der Sendeeinrichtung gespreizten T Symbole zu erzeugen;

**dadurch gekennzeichnet, dass** jedes der T Symbole gespreizt wird und jede der R Zeitreihen von Chips auf der Basis desselben benutzerspezifischen Spreizcodes entspreizt wird, wobei jedem Benutzer des Kommunikationssystems ein verschiedener Spreizcode zugewiesen wird.

**12.** Kommunikationsverfahren zur Verwendung durch eine Empfangseinrichtung (114) mit mindestens R Empfangsantennen (118) in einem Kommunikationssystem (101), außerdem eine Sendeeinrichtung (102) umfassend mit mindestens T Sendeantennen (116) und betriebsfähig zum Spreizen eines jeden von T Symbolen im Zeitbereich, um nur T Zeitreihen von Chips zu erzeugen und die T Zeitreihen von Chips jeweils von den T Sendeantennen zu senden, wobei das Verfahren umfasst:

Entspreizen einer jeden von R Zeitreihen von Chips, die von der Sendeeinrichtung jeweils an den R Empfangsantennen der Empfangseinrichtung empfangen werden, um R empfangene Symbole zu erzeugen;
Verarbeiten der R empfangenen Symbole, um eine Schätzung der an der Sendeeinrichtung gespreizten T Symbole zu erzeugen;

**dadurch gekennzeichnet, dass** jedes der T Symbole gespreizt wird und jede der R Zeitreihen von Chips auf der Basis desselben benutzerspezifischen Spreizcodes entspreizt wird, wobei jedem Benutzer des Kommunikationssystems ein verschiedener Spreizcode zugewiesen wird.

**13.** Kommunikationseinrichtung (114) zur Verwendung in einem Kommunikationssystem (101), das eine Sendeeinrichtung (102) mit mindestens T Sendeantennen (116) umfasst und dazu betriebsfähig ist, jedes von T Symbolen im Zeitbereich zu spreizen, um nur T Zeitreihen von Chips zu erzeugen und die T Zeitreihen von Chips von den jeweils T Sendeantennen zu senden, wobei die Kommunikationseinrichtung umfasst:

mindestens R Empfangsantennen (118), ein Mittel (120) zum Entspreizen einer jeden von R Zeitreihen von Chips, die von der Sendeeinrichtung jeweils an den R Empfangsantennen der Empfangseinrichtung empfangen werden, um R empfangene Symbole zu erzeugen; und ein Mittel (116-1) zum Verarbeiten der R empfangenen Symbole, um eine Schätzung der an der Sendeeinrichtung gespreizten T Symbole zu erzeugen;

**dadurch gekennzeichnet, dass** jedes der T Symbole in Betrieb gespreizt wird und jede der R Zeitreihen von Chips auf der Basis desselben benutzerspezifischen Spreizcodes in Betrieb entspreizt wird, wobei jedem Benutzer des Kommunikationssystems ein verschiedener Spreizcode zugewiesen wird.

**14.** Betriebsprogramm, das beim Ablaufen auf einer Kommunikationseinrichtung die Einrichtung veranlasst, ein Verfahren nach Anspruch 12 auszuführen.

**15.** Betriebsprogramm, das nach dem Laden auf eine Kommunikationseinrichtung die Einrichtung veranlasst, eine Einrichtung nach Anspruch 13 zu werden.

**16.** Betriebsprogramm nach Anspruch 14 oder 15, das auf einem Trägermedium getragen wird.

**17.** Betriebsprogramm nach Anspruch 16, worin das Trägermedium ein Sendemedium ist.

**18.** Betriebsprogramm nach Anspruch 16, worin das Trägermedium ein Speichermedium ist.

**Revendications**

**1.** Procédé de communication destiné à une utilisation dans un système de communication (101) comprenant un dispositif de transmission (102) ayant au moins T antennes de transmission (116) et un dispositif de réception (114) ayant au moins R antennes de réception (118), le procédé comprenant les étapes consistant à :

étaler chacun des T symboles dans le domaine temporel uniquement pour produire T séquences temporelles de chips ;
transmettre les T séquences temporelles de chips à partir des T antennes de transmission, respectivement, du dispositif de transmission ;
désétaler chacune des R séquences temporelles de chips reçues à partir du dispositif de transmission au niveau des R antennes de réception du dispositif de réception, respectivement, pour produire R symboles reçus ;
traiter les R symboles reçus pour produire une estimation des T symboles étalés au niveau du dispositif de transmission ;

**caractérisé en ce que** les T symboles sont chacun étalés et les R séquences temporelles de chips sont chacune désétalées en se basant sur le même code d'étalement spécifique à l'utilisateur, avec chaque utilisateur du système de communication se voyant allouer un code d'étalement différent.

**2.** Procédé de communication tel que revendiqué dans la revendication 1, dans lequel les codes d'étalement alloués à chaque utilisateur sont des codes d'étalement perpendiculaires.

**3.** Procédé de communication tel que revendiqué dans les revendications 1 ou 2, dans lequel les T séquences temporelles de chips sont modulées sur une sous-porteuse avant la transmission.

**4.** Procédé de communication tel que revendiqué dans la revendication 3, dans lequel la sous-porteuse est une sous-porteuse dans un schéma de multiplexage par répartition en fréquences orthogonales.

**5.** Procédé de communication tel que revendiqué dans l'une quelconque des revendications précédentes, dans lequel le système de communication est un système à entrées multiples, sorties multiples, MIMO.

**6.** Procédé de communication tel que revendiqué dans la revendication 5, dans lequel les R symboles reçus sont traités à l'aide d'un détecteur MIMO (116-1).

**7.** Procédé de communication tel que revendiqué dans la revendication 5 ou la revendication 6, dans lequel les T symboles sont des symboles codés MIMO produits par un codeur MIMO (108) pour une transmission à partir des T antennes de transmission.

**8.** Procédé de communication tel que revendiqué dans l'une quelconque des revendications précédentes, dans lequel les R symboles reçus sont traités à l'aide de techniques d'estimation non linéaires.

**9.** Procédé de communication tel que revendiqué dans la revendication 8, dans lequel les R symboles reçus sont traités à l'aide de la technique de probabilité a posteriori.

**10.** Procédé de communication tel que revendiqué dans l'une quelconque des revendications 1 à 7, dans lequel les R symboles reçus sont traités à l'aide de techniques d'estimation linéaires.

**11.** Système de communication (101) comprenant :

un dispositif de transmission (102) comprenant au moins T antennes de transmission (116), et un moyen (110) pour étaler chacun des T symboles dans le domaine temporel uniquement pour produire T séquences temporelles de chips, et transmettre les T séquences temporelles de chips à partir des T antennes de transmission, respectivement;

un dispositif de réception (114) comprenant au moins R antennes de réception (118), un moyen (120) pour désétaler chacune des R séquences temporelles de chips reçues depuis le dispositif de transmission au niveau des R antennes de réception, respectivement, pour produire R symboles reçus ; et un moyen (116-1) pour traiter les R symboles reçus pour produire une estimation des T symboles étalés au niveau du dispositif de transmission ;

**caractérisé en ce que** les T symboles sont chacun étalés et les R séquences temporelles de chips sont chacune désétalées en se basant sur le même code d'étalement spécifique à l'utilisateur, avec chaque utilisateur du système de communication se voyant allouer un code d'étalement différent.

**12.** Procédé de communication destiné à une utilisation par un dispositif de réception (114) ayant au moins R antennes de réception (118) dans un système de communication (101) comprenant en outre un dispositif de transmission (102) ayant au moins T antennes de transmission (116) et pouvant être utilisé pour étaler chacun des T symboles dans le domaine temporel uniquement pour produire T séquences temporelles de chips et pour transmettre les T séquences temporelles de chips depuis les T antennes de transmission, respectivement, le procédé comprenant les étapes consistant à :

désétaler chacune des R séquences temporelles de chips reçues depuis le dispositif de transmission au niveau des R antennes de réception du dispositif de réception, respectivement, pour produire R symboles reçus; traiter les R symboles reçus pour produire une estimation des T symboles étalés au niveau du dispositif de transmission ;

**caractérisé en ce que** les T symboles sont chacun étalés et les R séquences temporelles de chips sont chacune désétalées en se basant sur le même code d'étalement spécifique à l'utilisateur, avec chaque utilisateur du système de communication se voyant allouer un code d'étalement différent.

**13.** Dispositif de communication (114) destiné à une utilisation dans un système de communication (101) comprenant un dispositif de transmission (102) ayant au moins T antennes de transmission (116) et pouvant être utilisé pour étaler chacun des T symboles dans le domaine temporel uniquement pour produire T séquences temporelles de chips et pour transmettre les T séquences temporelles de chips depuis les T antennes de transmission, respectivement, le dispositif de communication comprenant :

au moins R antennes de réception (118), un moyen (120) pour désétaler chacune des R séquences temporelles de chips reçues depuis le dispositif de transmission au niveau des R antennes de réception, respectivement, pour produire R symboles reçus ; et un moyen (116-1) pour traiter les R symboles reçus pour produire une estimation des T symboles étalés au niveau du dispositif de transmission ;

**caractérisé en ce que** les T symboles sont chacun étalés en usage et les R séquences temporelles de chips sont chacune désétalées en usage, en se basant sur le même code d'étalement spécifique à l'utilisateur, avec chaque utilisateur du système de communication se voyant allouer un code d'étalement différent.

**14.** Programme d'exploitation qui, lorsqu'il est exécuté sur un dispositif de communication, entraîne que le dispositif exécute un procédé tel que revendiqué dans la revendication 12.

**15.** Programme d'exploitation qui, lorsqu'il est chargé dans un dispositif de communication, entraîne que le dispositif devienne un dispositif tel que revendiqué dans la revendication 13.

**16.** Programme d'exploitation tel que revendiqué dans la revendication 14 ou la revendication 15, placé sur un support porteur.

**17.** Programme d'exploitation tel que revendiqué dans la revendication 16, dans lequel le support porteur est un support de transmission.

**18.** Programme d'exploitation tel que revendiqué dans la revendication 16, dans lequel le support porteur est un support

de stockage.

FIG. 1

EP 1 580 919 B1

## FIG. 2

FIG. 3

FIG. 4

# FIG. 5

EP 1 580 919 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004075436 A

### Non-patent literature cited in the description

- **G.J. FOSCHINI ; M.J. GANS.** On limits of wireless communications in a fading environment when using multiple antennas. *Wireless Personal Communications,* 1998, vol. 6 (3), 311-335

- **N. MAEDA ; H. ATARASHI ; S. ABETA ; M. SAWA-HASHI.** Antenna Diversity Reception Appropriate for MMSE Combining in Frequency Domain for Forward Link OFCDM Packet Wireless Access. *IEICE Trans. Commun.,* October 2002, vol. E85-B (10), 1966-1977